# EUROPEAN PATENT APPLICATION

(11) **EP 4 776 152 A1**
(43) Date of publication of application: **15.07.2026**
(21) Application number: 26150732.1
(22) Date of filing: 08.01.2026
(51) Int. Cl.: G06F 16/31

(54) **MIXED INDEX SYSTEM FOR INFORMATION INTEGRATION IN PROCESSES**

(30) Priority: 09.01.2025 US 202519015543
(71) Applicant: Mitel Networks Corporation, Ottawa, Ontario K2K 3K1 (CA)
(72) Inventor: Brochonski, Michael, 82620265 Curitiba (BR); Braganza, Jonathan, Ottawa, K2E 6P2 (CA)
(74) Representative: McDougall, James

(57) **Abstract**

Systems and methods for creating a mixed index in a computerized data storage system. The systems and methods configured to receive a file for input into a data storage system, generate one or more segments of data from the plurality of data of the file, store, in a first index in the data storage system, the one or more segments of data, compare the one or more segments of data to an electronic library to retrieve results in the library at or above a threshold of similarity, store the results in a second index in the data storage system, and generate a mixed index in the data storage system based on the first index and the second index, the mixed index comprising the one or more segments of data from the first index and semantically related terms from the second index.

## Description

### FIELD

This disclosure relates to the field of managing computerized data. More particularly, the disclosure relates to methods and systems for creating a mixed index to manage computerized data.

### BACKGROUND

Previous solutions for managing unstructured data in Unified Communications (UC), Contact Center, and E-Consultation platforms, among others, have struggled to meet the evolving needs of users, particularly in light of emerging technologies like Generative Artificial Intelligence (AI). Users in these scenarios increasingly seek to integrate their heterogeneous data sources (e.g., patient records, exam results, and prescriptions in e-consultations, or various document types in UC platforms) into new processes to streamline operations and unlock new capabilities. Examples of this may include: intelligent synthesis of patient exam requirements, prescriptions, and results in e-consultations; automated follow-up scheduling based on exam results and doctor's notes; smart medication interaction checks using patient history and current prescriptions; context-aware file sharing and summarization in UC chat groups; automated meeting minutes generation from shared documents and chat logs in UC; intelligent document retrieval and linking within UC platforms; personalized health advice based on patient records and lifestyle data; smart triage systems for e-consultation platforms using patient history and symptoms; and automated creation of patient education materials based on diagnosis and treatment plans.

However, existing solutions often fall short when dealing with diverse, small to medium-sized file repositories or process-specific files. Common approaches include full-text searching, metadata tagging, Optical Character Recognition (OCR) + Natural Language Processing (NLP), vector databases with embedding models, rule-based extraction, and whole file insertion into Generative AI. Full-text searching, while fast, lacks semantic understanding and struggles with context, especially in complex medical documents or multi-threaded UC conversations. Metadata tagging is labor-intensive and prone to inconsistencies, particularly across varied medical file types or diverse UC content. OCR + NLP often fails to capture the structure of tables or meaning of diagrams, leading to context loss in medical reports or technical documents shared in UC platforms. Vector databases + embedding models can be powerful but are computationally expensive and complex to maintain, especially for smaller healthcare practices or teams using UC platforms. Rule-based extraction can be inflexible and struggles with unstructured data variety, particularly with evolving medical terminologies or dynamic UC content. Whole file insertion into Generative AI is inefficient for larger files, prone to parsing errors, and potentially wasteful of computational resources. This is especially problematic for sensitive patient data or comprehensive project documents in UC platforms.

In general, these methods often prove inadequate when users attempt to integrate their data with Generative AI processes. For smaller operations or limited file sets, maintaining vector databases or repeatedly processing entire documents through large language models (LLMs) is often impractical and cost prohibitive. Moreover, these approaches frequently struggle to accurately parse and interpret varied file formats and structures, leading to potential errors or missed information when used in AI-driven applications like virtual health assistants or intelligent UC plugins.

The limitations of existing solutions create a significant barrier for users looking to leverage their data in modern, AI-driven processes across UC and E-Consultation domains. There is a need for a more balanced, efficient, and adaptable approach that can bridge the gap between heterogeneous data sources and advanced AI applications. This is particularly beneficial for smaller operations or specific process-related files in healthcare e-consultations and team collaboration contexts.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system for creating a mixed index from incoming data.
FIG. 2 is a flow chart of a system for creating a mixed index from incoming data according to aspects of this disclosure.
FIGS. 3A and 3B illustrate a flow chart of a computerized method for file processing with a semantic search architecture utilizing the system for creating a mixed index from incoming data according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of example embodiments of the present disclosure provided herein is merely exemplary and is intended for purposes of illustration only; the following description is not intended to limit the scope of the disclosure as claimed. Moreover, recitation of multiple embodiments having stated features is not intended to exclude other embodiments having additional features or other embodiments incorporating different combinations of the stated features.

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure.

As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

As used herein, the terms application, module, analyzer, generator, engine, and the like can refer to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices).

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

This disclosure provides a system for creating a mixed index of computerized data from incoming data in a file as part of a computerized data storage system. More specifically, this disclosure provides an integrated system for streamlining document organization and retrieval by offering an intelligent, context-aware solution to the above-described challenges for professionals managing multiple customer accounts. The system can improve task orientation by enabling personnel to quickly locate and customize relevant files, automate repetitive tasks, and make the correct customer information readily accessible irrespective of document complexity.

This disclosure provides an approach for handling unstructured data in various business scenarios (UC, Contact Center, E-Consultation) by combining the strengths of different technologies to create a more efficient and cost-effective solution that can be used by processes, especially when trying to integrate into Generative AI processes and extracting the full capabilities of the process in an efficient manner.

More specifically, the systems disclosed herein can create a mixed index that combines sparse and dense indexing techniques, allowing for lightweight, accurate retrieval of information without the need for constant use of embedding models or vector databases. Unlike traditional methods that may use embedding models for each query or maintain complex vector databases, the system described herein may use these resource-intensive processes only during initial indexing. By using these resource-intensive processes during initial indexing, as opposed to for each query, the system described herein improves the efficiency of information retrieval. The system disclosed herein can perform initial indexing to create both the sparse and dense index and then combine these two indexes to create a mixed index.

By combining sparse indexing (for entities) and dense indexing (for context and semantics), the systems described herein can provide more precise results than pure semantic search or traditional keyword-based methods and therefore, can improve accuracy of information retrieval. The systems can handle various file types and structures, and automatically identify and process different elements (e.g., text, tables, images) appropriately.

Embodiments of the invention address a challenge in modern information management systems, particularly in Unified Communications (UC), Contact Centers, and E-Consultation services. Users of these platforms grapple with a diverse array of unstructured files associated with the subject matter needs of users including relevant process files. Unstructured files may have a heterogeneous nature, ranging from text documents to images, tables, and graphs, which poses an impediment to efficient information retrieval and utilization.

Current methods for handling such diverse, unstructured data are often inadequate. Using current methods, the user may rely on semantic or simplistic keyword searches missing contextual nuances, or the user may leverage complex, resource-intensive solutions such as LLMs and vector databases repeatedly. These approaches can be costly, and difficult to maintain, for smaller operations or when dealing with a limited set of files. Moreover, these approaches often struggle to accurately parse and interpret varied file formats and structures, leading to potential errors or missed information.

The limitations of existing solutions hamper user productivity and system efficiency in several ways. These may include inaccurate or incomplete information retrieval, high latency in search and processing operations, excessive computational resource requirements, difficulty in maintaining and updating the knowledge base, inability to effectively handle mixed media types within a single system, challenges in providing context-aware responses to queries, and inefficient use of generative AI.

One of the problems the embodiments provided for in this disclosure aims to solve revolves around task orientation and file management challenges faced by professionals in contact center environments and other support or sales-related roles. Agents handling multiple accounts often grapple with locating and organizing customized documents for each customer, leading to inefficiencies in service delivery and lost productivity. The issue becomes particularly damaging in high-pressure, customer-facing roles where professionals are required to juggle various documents, templates, and records, often spread across different systems or formats, e.g., "Just a second while I find my notes on this one." or "As you can see from the chart I am presenting...hold on second while the correct policy deck."

Therefore, the embodiments provided for in this disclosure can address common pain points in existing solutions. Traditional semantic search often lacks precision and struggles with synonyms and context. Pure vector database approaches require constant maintenance and can be complex and costly to operate. Naive methods of feeding entire documents into LLMs can lead to degraded response quality, increased latency, and higher costs. Existing solutions often struggle to handle heterogeneous data types effectively within a single system.

By reducing the need for constant embedding model usage and complex database management, the system described herein may lower operational costs. The approach implemented by the systems disclosed herein may be particularly suited for scenarios with a limited number of files, making the systems described herein ideal for small to medium-sized operations.

The systems described herein may also improve maintenance requirements, as updates may be required only when files are added, modified, or deleted, simplifying ongoing management.

By combining the strengths of various techniques (embedding models, vector databases, traditional search algorithms), the system described herein can offer a more balanced, efficient, and practical solution for managing and retrieving information from unstructured data sources.

The disclosed mixed index systems offer significant advantages for Unified Communications (UC), Contact Centers, and E-consultation services, particularly when integrating with Generative AI processes. These scenarios can often involve heterogeneous data from various sources, which can be challenging to incorporate efficiently into AI-driven workflows. The system can provide a streamlined solution for handling small to medium-sized file repositories or process-specific files, enabling more effective integration with advanced AI technologies. These applications and benefits could include: (1) enhanced customer support by quickly retrieving relevant information from diverse document types to provide accurate, context-aware responses; (2) improved decision-making by efficiently analyzing and summarizing data from multiple sources for better insights; (3) automated report generation by compiling comprehensive reports by extracting and combining information from various file formats; (4) personalized recommendations by leveraging customer history and preferences stored in different file types to offer tailored suggestions; (5) intelligent process automation by seamlessly incorporating document contents into workflow automation systems; and (6) knowledge base optimization by maintaining an up-to-date, easily searchable repository of information across various file formats.

By offering a more efficient alternative to vector databases or full context window usage in LLMs, this system can allow organizations to integrate their specific data into Generative AI processes more transparently and accurately. This approach may be valuable when dealing with limited sets of files or when frequent updates are necessary, providing a balance between the power of AI and the need for efficient, error-resistant data processing.

Additional scenarios/use-cases for the systems include, but are not limited to, (1) Healthcare Information Management (efficiently process and index medical records, lab reports, and patient histories, enable quick retrieval of relevant medical information during consultations, assist in medical research by allowing easy access to specific data points across multiple documents); (2) Legal Document Analysis (index and categorize large volumes of legal documents, contracts, and case files, facilitate rapid search and retrieval of specific clauses or precedents, aid in due diligence processes by quickly identifying relevant information); (3) Government and Public Records (enable citizens to quickly find relevant information in government publications, assist in policy research by providing easy access to specific data points across multiple documents), (4) Intellectual Property Management (index and analyze patent applications and existing patents, facilitate prior art searches and patent landscaping), and (5) Customer Support Knowledge Bases (improve search functionality in support documentation, enable more accurate automated responses to customer queries, and facilitate the creation and maintenance of FAQs by identifying common issues).

Furthermore, mixed-index systems disclosed herein may also allow for the intelligent organization of documents and files, reducing the clutter that often plagues systems dependent on purely metadata-based searches. It achieves this by assigning statistical relevance to documents, meaning that frequently used or highly important files can be instantly accessible, while less relevant data may be deprioritized. This method offers a balanced solution that is lightweight enough for real-time applications but powerful enough to handle the complexity of unstructured data.

To summarize, technical advantages of the systems and methods described herein may be eliminating continuous use of embedding models or vector databases after initial processing, cost-effective searching for smaller-scale operations with limited numbers of files or data, enabling lightweight semantic searches with high accuracy without complex real-time parsing, and enhancing downstream processes by providing readily usable, context-rich data chunks. The system 100 may also be flexible and maintainable because it can be updated when files are added, modified, or deleted, it can overcome limitations of pure semantic search or naive full-text inclusion in LLMs, and can pre-processes and structure data intelligently, reducing complexity for subsequent processes.

As an example, consider a chatbot evaluating guest needs based on information from portable document format (PDF) files. Traditional approaches might use a vector database and embedding model to process the PDF, requiring careful parsing, constant maintenance, and synchronization, or might add the whole PDF file to the process with an LLM, risking parsing errors for complex elements like tables or images.

The proposed systems provided for may address these issues by creating a preprocessed, structured mixed-index file that handles various file elements intelligently, enabling lightweight, accurate searches without relying on machine learning models after the initial processing, and simplifying maintenance and updates for small-scale operations.

By pre-processing and structuring the data intelligently, the systems described herein can enhance the performance of downstream processes like chatbots or information extraction systems, providing them with readily usable, context-rich data chunks without the need for complex real-time parsing or vision model applications being recurrently used. It is especially useful for Generative AI driven tasks that can take full advantage of easily searchable and correctly parsed information to deliver accurate and useful information to the end user of this process.

Furthermore, the systems may not rely on machine learning models after its first stage or during its use, but when a file is added or modified. When a file is deleted, it may be a simple operation of removing the chunks from the mixed index.

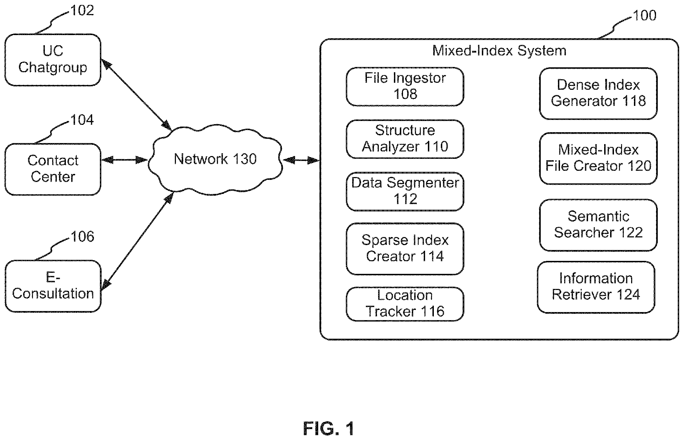

Turning to the Figures, wherein the purpose is to describe embodiments of this disclosure and not to limit the scope of the claims, FIG. 1 shows an example mixed-index system 100 configured to create a mixed index from incoming data. The incoming data may originate from a UC Chatgroup 102, a Contact Center 104, or E-Consultation 106. However, this is not meant to be limiting or required. In other embodiments, the incoming data may originate from other sources, such as healthcare software, legal software, public records, etc. The UC Chatgroup 102 may refer to data originating from a virtual space within a unified communications platform where users can engage in text-based conversations, voice calls, video conferencing, or file sharing. For example, a UC Chatgroup 102 may include a platform such as Microsoft Teams, Zoom, Slack, and the like. The Contact Center 104 may be a centralized electronic system where a business may manage customer interactions. For example, the Contact Center 104 may be a call center, live chat, and the like. The E-Consultation 106 may be an electronic communication between a healthcare provider in order to share patient information, refer patients, make consultations, and the like.

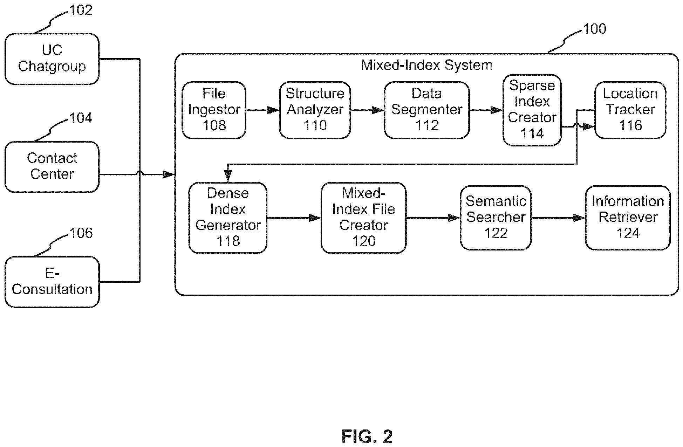

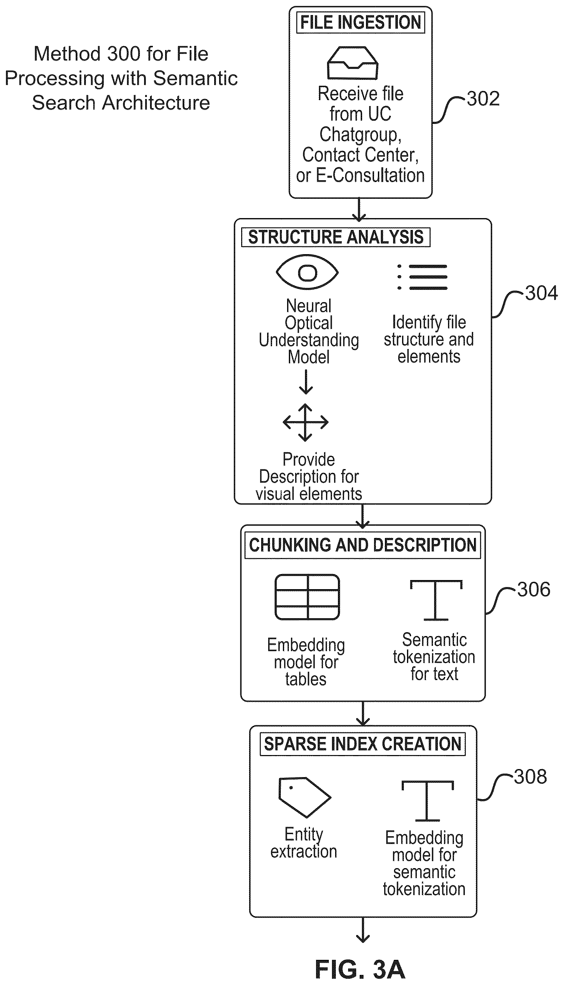

The mixed-index system 100 may be a data storage system and may include a file ingestor 108, a structure analyzer 110, a data segmenter 112, a sparse index creator 114, a location tracker 116, a dense index generator 118, a mixed-index file creator 120, a semantic searcher 122, and an information retriever 124. The UC Chatgroup 102, Contact Center 104, E-Consultation 106, and mixed-index system 100 may communicate with each other via a network 130. Although the UC Chatgroup 102, Contact Center 104, and E-Consultation 106 are depicted in FIG. 1 as separate from the mixed-index system 100, it will be appreciated that in other embodiments the UC Chatgroup 102, Contact Center 104, and E-Consultation 106 may be encompassed within mixed-index system 100. The components of the mixed-index system 100 may work together to receive incoming data and create a mixed index using the received data. The details of the mixed-index creation process are described in further detail below with respect to FIG. 2 and FIGS. 3A-3B.

According to various embodiments, the system 100 may operate in a networked environment using connections to other local or remote computers through the network 130 via a network interface unit connected to the bus. The network interface unit may facilitate connection of the computing device inputs and outputs to one or more suitable networks and/or connections such as a local area network (LAN), a wide area network (WAN), the Internet, a cellular network, a radio frequency (RF) network, a Bluetooth-enabled network, a Wi-Fi enabled network, a satellite-based network, or other wired and/or wireless networks for communication with external devices and/or systems.

FIG. 2 is a flow chart for a mixed-index system 100 for creating a mixed index from incoming data according to aspects of this disclosure.

First, the mixed-index system 100 may receive data from the UC Chatgroup 102, the Contact Center 104, or the E-consultation 106. However, this is not meant to be limiting or required, as the data may originate from other sources beyond those described herein.

The file ingestor 108 may first receive the data in the form of a file from one of the data sources (e.g., UC Chatgroup 102, the Contact Center 104, or the E-Consultation 106) for input into the mixed-index system 100. The file may include a collection of digital data stored electronically, which can include documents like text files, images, videos, music, spreadsheets, program code, and the like, or a document with a combination of text, images, videos, music, spreadsheets, program code, etc. After the file is ingested, file ingestor 108 can initiate the processing workflow of the file and send the file to the structure analyzer 110.

The structure analyzer 110 can scan or otherwise analyze the file to determine or identify the file's structure, components of the file within the structure, and component types corresponding to the components within the file. For example, the structure may include a number of different components or elements with a corresponding component type, with the component types being tables, images, raw text, lists, diagrams, handwritten notes, etc.

Once the structure analyzer 110 determines the structure of the file, the data segmenter 112 can generate segments (or otherwise referred to as "chunks") of data from the data in the file based on the determined structure of the file. For each of the generated segments of data, the data segmenter 112 can further tokenize the segment of data and assign a location to the segment of data indicating an original position of the segment of data within the file. How the data segmenter 112 performs tokenization may depend on the component type of the file. For example, for data with a table component type (e.g., a file containing a table in it), the table headers may be interpreted by an embedding model for semantic tokenization. The row values of the table may undergo entity extraction via semantic tokenization (even if the rows are nested). Then, the entire table may be saved as a single segment. As another example, for segments with an unstructured text component type, the content of the file may be semantically evaluated with an embedding model and segmented.

Based on the segments of data generated by the data segmenter 112, the sparse index creator 114 can create a first, or "sparse," index in the mixed-index system 100. "Sparse" may imply that the index includes identifiers of the data, like keywords or labels, that may be more focused and precise but do not always capture the context or deeper meaning behind the data. For example, the sparse index may allow for searching based on the "surface" information, such as a document's title or tags. When storing the tokenized segments of data, the system 100 may generate embeddings from the tokenized segments and store the embeddings in the sparse index.

The location tracker 116 can assign a location to each segment of data indicating the original position of the segment of data within the file (e.g., table 1's location may be page 3 of a PDF). The location of each segment may be stored in the sparse index.

The dense index generator 118 may compare, using an embedding model and similarity algorithm, the tokenized segments of data in the sparse index to an electronic library to retrieve results in the library at or above a threshold of similarity to the tokenized segments in the sparse index. The embedding model may be a type of machine learning (ML) model that can condense information into dense representations in a multi-dimensional space, such as Word2Vec, Bidirectional Encoder Representations from Transformers (BERT), etc. Therefore, in some embodiments, the tokenized segments may be converted to vector form using the embedding model. The electronic library may be a computer implemented collection of words. The electronic library may be a vector database, such as a verbal term (e.g., Bag of Words) library. The similarity algorithm may determine the similarity between the segments of data and the words in the library. For example, the similarity may be determined using a cosine similarity between vectors in the electronic library vector database and the vector forms of the tokenized segments. The threshold of similarity may refer to a predetermined minimum similarity value between the tokenized segments and the collection of words in the library, such as a minimum cosine similarity value.

The dense index generator 118 may store the results of the comparison in a second, or "dense," index in the mixed-index system 100. Therefore, the dense index may include results from the library that were above the threshold, along with the tokenized segments from the sparse index. The dense index may include terms that are semantically related to the files stored in the mixed-index system 100. The dense index, in contrast to the sparse index, may have a deeper search option, focusing on the meaning or context within the data. The dense index search may use AI techniques to understand relationships between concepts, even if the exact keywords aren't there. For example, this type of search may be useful when looking for something based on the content's meaning, not just its label.

The mixed-index file creator 120 can generate a mixed index in the mixed-index system 100 based on the sparse index and the dense index. The mixed index may include the tokenized segments of data from the sparse index and the semantically related terms from the dense index, along with the location data, raw information, or description of the data determined as described above. These tokenized segments and semantically related terms can be searchable in the mixed index using a semantic search. For example, the semantic searcher 122 can search the mixed index.

The information retriever 124 may receive a request to search for information within the mixed-index system 100 and retrieve information related to the request from the mixed index using the semantic searcher 122. That information can be output to the requester (e.g., via a user interface (UI) or computer display).

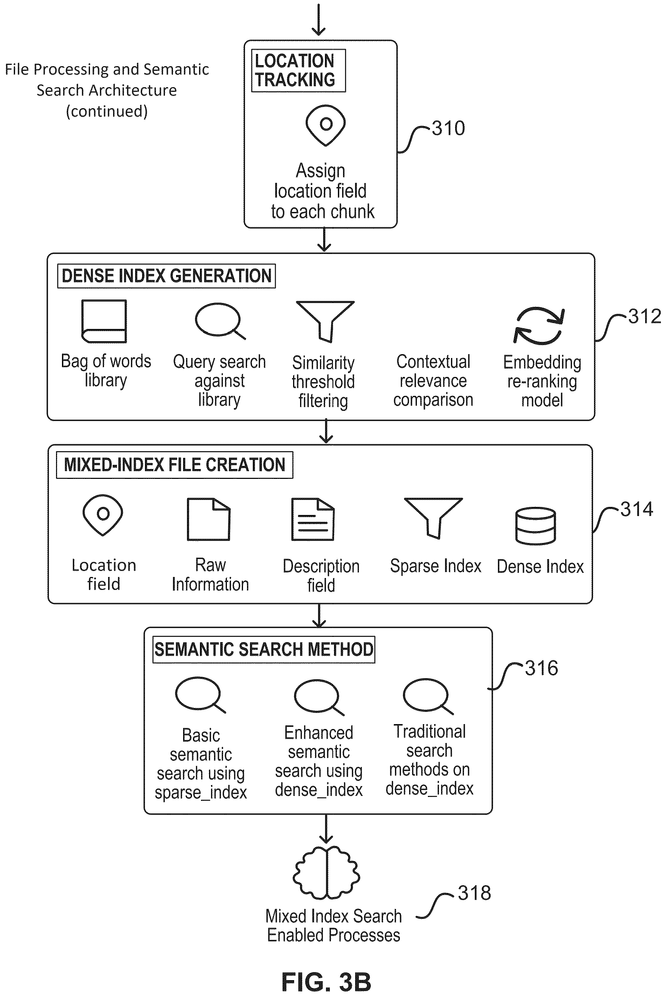

FIGS. 3A and 3B illustrate a flow chart of a computerized method 300 for file processing with a semantic search architecture utilizing the mixed-index system 100 for creating a mixed index from incoming data according to aspects of this disclosure.

The method 300 begins at block 302, where the method 300 includes receiving a file, such as from the UC Chatgroup 102, a Contact Center 104, or E-Consultation 106.

In block 304, the method 300 includes identifying or determining a file structure and elements or components of the received file. The method 300 may use a neural optical understanding model to scan the file to identify its structure component type, (e.g., tables, images, raw text, lists, diagrams, handwritten notes, etc.). The method 300 may also provide a description for visual elements. For example, if the component type is an image, the method 300 may produce a description that describes the contents of an image or video.

In block 306, the method 300 includes semantically tokenizing the text in the file, using an embedding model for tables. Tokenizing may include dividing the segment of data into individual units of data that would be understandable to an embedding model. For images and diagrams, a vision model may create a textual description of the image or diagram, saved in a "description" field. For tables, the table headers may be interpreted by an embedding model for semantic tokenization. Row values in the table (even if nested) may undergo entity extraction via semantic tokenization. The entire table may then be saved as a single segment or "chunk." For unstructured text, the content may be semantically evaluated with an embedding model and segmented (e.g., "chunked").

In block 308, the method 300 includes performing semantic tokenization on the content or description using an embedding model and entity extraction. Main entities (actions, names, places, verbs, nouns, adjectives, companies, etc.) from the data segments may be saved in a "sparse" index field. For tables, the sparse index may include entities from both headers and rows.

In block 310, the method 300 includes tracking a location of the data segments. Each "chunk" or segment may be assigned a "location" field, indicating its position within the original document (e.g., page number in a PDF, sheet name in an Excel file).

In block 312, the method 300 includes generating a dense index by utilizing a library, such as a bag of words library in a vector database. Each sparse index can perform a query search against this library and/or compare the data segments to the contents in the library. Results above a similarity threshold may be retained and stored in the dense index. These results may be further filtered by comparing them with the original "chunk" for contextual relevance. Then, in some embodiments, an embedding re-ranking model can refine the results, considering the original semantic token as context. The final set of terms can be added to a "dense index" field for each chunk.

As an example, where the "chunk" contains the word "Covid-19," the method 300 may query the bag of words library for words that are similar to "covid-19." The results of the query may therefore include a number of words related to "covid-19" such as "coronavirus," "covid," "SARS-CoV-2," etc. These words can then be stored in the dense index.

In block 314, the method 300 includes generating a mixed-index file. The process can culminate in a structured mixed-index file containing: raw information extracted by a smart parser, description field (for images, charts, etc.), location field, the sparse index with main entities (actions, names, places, verbs, nouns, adjectives, companies, etc.), the dense index with context-aware, and semantically related terms.

In block 316, the method 300 includes utilizing a semantic search method on the mixed-index. For example, the system can enable lightweight semantic searches using the mixed-index structure where basic semantic functionality uses the sparse index, which contains main entities, enhanced semantic search utilizes the dense index, which includes context-aware, semantically related terms, and traditional search methods (e.g., Fuzzy matching with Full-Text Search 5 (FTS5), Best Match 25 (BM25(S)(+)), Term Frequency - Inverse Document Frequency (TF-IDF)) can be applied to the dense index for precise matching, overcoming weaknesses of semantic search such as synonyms or context restriction.

In 318, mixed index search processes are enabled. This means that the mixed index is ready to be searched.

When a mixed-index system 100 receives a new file containing new data, a similar method to the above-described method may occur. The system 100 may, after receiving the new file, determine the file structure of the file and generate segments of data from the new data based on the structure. Each segment may be tokenized and assigned a location. The tokenized segments and the location may then be stored in the sparse index. The tokenized segments may be compared to the electronic library to retrieve results in the library at or above a similarity threshold. The new results can be stored in the dense index. Then, at least a portion of the mixed index is regenerated based on the sparse index and dense index.

When a mixed-index system 100 receives an updated version of a file that was previously entered into the system 100, a similar method to the above-described method may occur. The system 100 may, after receiving the updated file, determine the file structure of the file and generate segments of data from the updated data based on the structure. The system 100 may compare the current segments of data to the previous segments of data for that file to identify changed data between the two versions of the file. Based on the comparison, each changed segment may be tokenized and reassigned a location. The sparse index may then be updated with the newly tokenized segments and the location. The tokenized segments may be compared to the electronic library to retrieve results in the library at or above a similarity threshold. The new results can be stored in the dense index. Then, at least a portion of the mixed index is regenerated based on the sparse index and dense index.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

Benefits, other advantages, and solutions to problems have been described herein with regard to specific embodiments. Furthermore, the connecting lines shown in the various figures contained herein are intended to represent example functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching may be used throughout the figures to denote different parts but not necessarily to denote the same or different materials.

Methods, systems, and articles are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A computer-implemented method, the method comprising:
receiving a file for input into a data storage system, the file comprising a plurality of data;
determining a structure of the file, the structure comprising one or more components, each component having a corresponding component type, wherein the component type comprises one of: table, image, raw text, list, diagram, or handwritten notes;
generating, based on the structure, one or more segments of data from the plurality of data of the file;
for each segment of the one or more segments of data:
tokenizing, using an embedding model, the segment of data; and
assigning a location to the segment of data indicating an original position of the segment of data within the file;
storing, in a sparse index in the data storage system, the one or more tokenized segments of data and the location of the respective segments, the sparse index comprising a plurality of tokenized segments of data related to a plurality of files in the data storage system;
comparing, using the embedding model and a similarity algorithm, the one or more tokenized segments of data in the sparse index to an electronic library to retrieve results in the library at or above a threshold of similarity to the one or more tokenized segments of data in the sparse index;
storing the results in a dense index in the data storage system, the dense index comprising a plurality of terms that are semantically related to the plurality of files in the data storage system;
generating a mixed index in the data storage system based on the sparse index and the dense index, the mixed index comprising the one or more tokenized segments of data from the sparse index and the plurality of semantically related terms from the dense index, the one or more tokenized segments of data and the plurality of semantically related terms being searchable using a semantic search;
receiving a request to search for information within the data storage system;
retrieving, based on the request for information, information related to the request from the mixed index using semantic searching; and
outputting the retrieved information.

2. The computer-implemented method of claim 1, wherein the component type of the component of the one or more components comprises an image and wherein generating the one or more segments comprises generating a textual description of the image using a vision model.

3. The computer-implemented method of claim 1 or claim 2, wherein the component type of the component of the one or more components comprises a table and wherein generating the one or more segments comprises:
interpreting headers of the table using the embedding model, and
extracting row values using semantic tokenization.

4. The computer-implemented method of any preceding claim, wherein tokenizing the one or more segments of data comprises dividing the segment of data into individual units of data understandable to the embedding model.

5. The computer-implemented method of any preceding claim, wherein storing the one or more tokenized segments of data comprises:
generating one or more embeddings of the one or more tokenized segments; and
storing the one or more embeddings in the sparse index.

6. The computer-implemented method of any preceding claim, wherein the library comprises a computer-implemented catalog of words in a vector database and optionally wherein the threshold of similarity to the one or more tokenized segments of data in the sparse index is based on a cosine similarity between the one or more tokenized segments and the catalog of words in the vector database,
and/or wherein the mixed index comprises one or more of: raw information from the file extracted by a smart parser, a description field for images, a location field, the sparse index with main entities, and the dense index with context-aware, semantically related terms.

7. The computer-implemented method of any preceding claim, wherein the plurality of files in the data storage system relate to one or more of: healthcare data, customer data, legal document data, government data, public records, or intellectual property data.

8. The computer-implemented method of any preceding claim, further comprising:
receiving a new file for input into the data storage system, the new file comprising a plurality of new data;
determining a current structure of the new file, the current structure comprising one or more current components, each current component having a corresponding current component type;
generating, based on the current structure, one or more current segments of data from the plurality of new data;
for each segment of the one or more current segments of data:
tokenizing, using the embedding model, the segment of data; and
assigning a current location to the segment of data indicating a current position of the segment of data within the new file;
storing, in the sparse index, the one or more tokenized current segments of data and the location of the respective segments;
comparing, using the embedding model, the one or more tokenized current segments of data to the electronic library to retrieve results in the library at or above the threshold of similarity to the one or more tokenized current segments of data in the sparse index;
storing the results in the dense index in the data storage system; and
regenerating at least a portion of the mixed index in the data storage system based on the sparse index and the dense index.

9. The computer-implemented method of any preceding claim, further comprising:
receiving an updated file for input into the data storage system, the updated file comprising an updated plurality of data, wherein the updated plurality of data is a changed version of the plurality of data;
determining a current structure of the updated file, the current structure comprising one or more current components;
generating, based on the current structure, one or more current segments of data from the updated plurality of data;
comparing the one or more current segments of data with the one or more segments of data to identify changed data between the updated file and the file;
based on the comparison, for each segment of the one or more current segments of data:
tokenizing, using the embedding model, the segment of data; and
reassigning the location to the segment of data indicating an updated position of the segment of data within the file;
updating, in the sparse index, the one or more tokenized segments of data with the one or more tokenized current segments of data and the location of the respective segments;
comparing the one or more tokenized current segments of data to the electronic library to retrieve updated results in the library at or above the threshold of similarity to the one or more tokenized current segments of data in the sparse index;
storing the results in the dense index in the data storage system; and
regenerating at least a portion of the mixed index in the data storage system based on the sparse index and the dense index.

10. A system comprising:
one or more computing devices associated with a processor and a memory for executing computer-executable instructions configured to:
receive a file for input into a data storage system, the file comprising a plurality of data;
generate one or more segments of data from the plurality of data of the file;
store, in a first index in the data storage system, the one or more segments of data, the first index comprising a plurality of segments of data related to a plurality of files in the data storage system;
compare the one or more segments of data to an electronic library to retrieve results in the library at or above a threshold of similarity to the one or more segments of data in the first index;
store the results in a second index in the data storage system, the second index comprising a plurality of terms that are semantically related to the plurality of files in the data storage system; and
generate a mixed index in the data storage system based on the first index and the second index, the mixed index comprising the one or more segments of data from the first index and the plurality of semantically related terms from the second index, the one or more segments of data and the plurality of semantically related terms being searchable using a semantic search.

11. The system of claim 10, wherein to store the results in the second index, the computer-executable instructions are further configured to:
for each segment of the one or more segments of data:
tokenize, using an embedding model, the segment of data; and
assign a location to the segment of data indicating an original position of the segment of data within the file;
generate one or more embeddings of the one or more tokenized segments; and
store the one or more embeddings in the first index.

12. The system of claim 10 or claim 11, wherein the electronic library comprises a computer-implemented catalog of words in a vector database and optionally wherein the threshold of similarity to the one or more segments of data in the first index is based on a cosine similarity between the one or more segments and the catalog of words in the vector database.

13. The system of any of claims 10 to 12, wherein the mixed index comprises one or more of: raw information from the file extracted by a smart parser, a description field for images, a location field, the first index with main entities, and the second index with context-aware, semantically related terms.

14. A non-transitory computer-readable medium having instructions stored thereon that, when executed by one or more processors, cause the one or more processors to perform operations comprising:
receiving a file for input into a data storage system, the file comprising a plurality of data;
generating one or more segments of data from the plurality of data of the file;
storing, in a first index in the data storage system, the one or more segments of data, the first index comprising a plurality of segments of data related to a plurality of files in the data storage system;
comparing the one or more segments of data to an electronic library to retrieve results in the library at or above a threshold of similarity to the one or more segments of data in the first index;
storing the results in a second index in the data storage system, the second index comprising a plurality of terms that are semantically related to the plurality of files in the data storage system; and
generating a mixed index in the data storage system based on the first index and the second index, the mixed index comprising the one or more segments of data from the first index and the plurality of semantically related terms from the second index, the one or more segments of data and the plurality of semantically related terms being searchable using a semantic search.

15. The non-transitory computer-readable medium of claim 14, wherein storing the results in the second index further causes the one or more processors to perform operations comprising:
for each segment of the one or more segments of data:
tokenizing, using an embedding model, the segment of data; and
assigning a location to the segment of data indicating an original position of the segment of data within the file;
generating one or more embeddings of the one or more tokenized segments; and
storing the one or more embeddings in the first index
and/or wherein the mixed index comprises one or more of: raw information from the file extracted by a smart parser, a description field for images, a location field, the first index with main entities, and the second index with context-aware, semantically related terms.
